Europäisches Patentamt

European Patent Office

Office européen des brevets

(11) Veröffentlichungsnummer: **0 062 792**
**B1**

# EUROPÄISCHE PATENTSCHRIFT

(45) Veröffentlichungstag der Patentschrift:
**19.09.84**

(21) Anmeldenummer: **82102399.1**

(22) Anmeldetag: **23.03.82**

(51) Int. Cl.³: **G 03 D 3/13,** F 16 C 13/00, B 21 K 1/02

(54) **Verfahren zum Herstellen von Walzen zum Transportieren und/oder Pressen von blatt- oder bandförmigem, fotografischem Material.**

(30) Priorität: **26.03.81 DE 3111923**

(43) Veröffentlichungstag der Anmeldung:
**20.10.82 Patentblatt 82/42**

(45) Bekanntmachung des Hinweises auf die Patenterteilung:
**19.09.84 Patentblatt 84/38**

(84) Benannte Vertragsstaaten:
**CH FR GB IT LI**

(56) Entgegenhaltungen:
**DE - A - 2 734 268**
**FR - A - 2 080 696**
**US - A - 3 607 494**
**US - A - 4 055 879**

(73) Patentinhaber: **AGFA-GEVAERT Aktiengesellschaft,
D-5090 Leverkusen 1 (DE)**

(72) Erfinder: **Geyken, Erwin, Brunhildenstrasse 4,
D-8014 Neubiberg (DE)**
Erfinder: **Köninger, Horst, Langbürgener Strasse 14,
D-8000 München 90 (DE)**
Erfinder: **Schirk, Günter, Ruppertsberger Strasse 15,
D-8000 München 90 (DE)**

BUNDESDRUCKEREI BERLIN

## Beschreibung

Die Erfindung betrifft ein Verfahren zum Herstellen von Walzen zum Transportieren und/oder Pressen von blatt- oder bandförmigem, fotografischem Material, welche eine im Verhältnis zum Durchmesser große Länge, ein zylindrisches Metallrohr als Grundkörper, zum Walzenmantel konzentrische Lagerzapfen und einen gegen aggressive Flüssigkeiten widerstandsfähigen Überzug aufweisen.

Aus der DE-C-2 232 424 ist ein Verfahren zur Herstellung von Walzen bekannt, bei welchem ein Metallrohr großer Länge mit einem Überzug versehen, sodann das Rohr auf die gewünschte Länge abgeschnitten wird und schließlich Wellenstücke tragende Kunststoffeinsätze in die beiden offenen Rohrenden eingeklebt werden. Die Kunststoffeinsätze werden sodann mit dem Überzug auf dem Metallrohr flüssigkeitsdicht miteinander verbunden.

Wenn auch die Qualität dieser bekannten Walzen zweifellos gut ist, so sind sie doch verhältnismäßig teuer. Die hohen Herstellungskosten kommen in erster Linie von einem aufwendigen Herstellungsverfahren, bei welchem neben der Bearbeitung des Metallrohrs mit seinem Überzug die Einsätze und Wellenstücke einzeln gefertigt und zusammengebracht werden müssen. Dabei spielen auch die Kosten für die Einsätze und das Material der Wellenstücke eine Rolle.

Aufgabe der Erfindung ist es daher, ein billigeres und schnelleres Verfahren zum Herstellen der in Rede stehenden Walzen zu schaffen. Mit dem erfindungsgemäßen Verfahren soll auch eine hinsichtlich Gewicht und Stabilität verbesserte Walze geschaffen werden.

Diese Aufgabe wird durch die im Kennzeichen des Anspruchs 1 bzw. 4 beschriebenen Merkmale gelöst.

Mit der Erfindung wird in einem Arbeitsgang in wenigen Sekunden ein Walzenkern aus einem Teil geschaffen, welcher eine höhere Stabilität gegenüber dem bekannten Walzenkern aufweist, da beim Rundhämmern eine Verdichtung des Werkstoffes im konischen Übergangsbereich erzielt wird, wodurch sich das Durchbiegemoment der Walze erhöht. Die kurze Herstellungszeit wird insbesondere auch dadurch erreicht, daß spanabhebende Arbeiten und ein Überdrehen der Walzenendstücke entfallen können, nachdem mit dem Rundhämmern die Endstücke bereits eine rollierte Oberfläche erhalten. Nachdem der Walzenkern insgesamt mit dem gewünschten Überzug aus einer Elastomer- oder Kunststoffschicht versehen wird, erübrigt sich auch der Arbeitsgang des Verbindens der Überzugsschicht mit den Einsätzen. Durch den Wegfall der gesonderten Wellenstücke und Einsätze weisen die Walzen auch ein geringeres Gewicht auf.

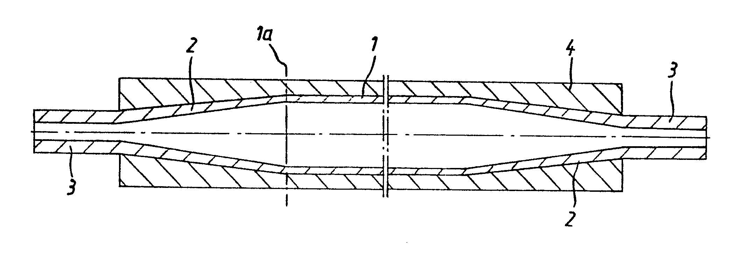

Weitere Einzelheiten und Vorteile der Erfindung ergeben sich aus den Unteransprüchen im Zusammenhang mit der Beschreibung eines Ausführungsbeispieles, das anhand einer einzigen Figur erläutert ist. Die Figur zeigt einen Querschnitt durch eine nach dem erfindungsgemäßen Verfahren hergestellte Walze.

Das erfindungsgemäße Verfahren sieht dabei vor, daß zunächst ein zylindrisches Rohr auf eine bestimmte Länge zugeschnitten wird. Diese Länge liegt um einige Prozent unter der gewünschten Endlänge des fertigen Produktes. Dieser Prozentsatz hängt dabei von der Länge des Rohres, der Länge des konischen Überganges, des Werkstoffes und von dem Verhältnis des Rohrdurchmessers zum Durchmesser des Lagerzapfens ab. Sodann werden die zugeschnittenen Rohre in eine Hammer- und Reduziermaschine eingespannt und in der voreingestellten Weise bearbeitet. Dabei wird das Rohr 1 an einer im Außenbereich liegenden Stelle 1a mittels Rundhämmern bearbeitet. Die Stelle 1a wird im allgemeinen empirisch festgestellt und hängt ab von der gewünschten Länge des Außenstückes bzw. des konischen Übergangsbereiches. An die Stelle 1a schließt sich nach außen der konische Übergangsbereich 2 an und an diesen ein zylindrisches Außenstück 3 mit dem gewünschten Enddurchmesser, das damit den Lagerzapfen bildet.

Die Hammer- und Reduziermaschinen arbeiten heutzutage im allgemeinen vollautomatisch und berücksichtigen alle geforderten Parameter, wie Rundlaufabweichung, Oberflächenbeschaffenheit, Durchbiegung und Parallelität der Rohrenden, gleichzeitig in einem Arbeitsgang.

Das Metallrohr ist aus einem nicht rostenden, chemikalienbeständigen Werkstoff, wie V4A, vorzugsweise mit der Kennzahl 1.4401, gebildet. Wichtig ist, daß der Werkstoff des Rohres eine gute Verbindung mit der aufgetragenen Schicht des Überzuges eingeht. Der Überzug kann entweder ein thermoplastischer Kunststoff, wie Hartpolyvenylchlorid, feinkristallines Polyamid, Polypropylen, Polyäthylen oder eine Mischung dieser Werkstoffe sein. Satt Kunststoff kann der Überzug auch aus Gummi oder Hartgummi gebildet sein. Der Gummi kann auf den Walzenkern aufvulkanisiert, der Kunststoff extrudiert oder aufgespritzt oder mittels eines anderen geeigneten Verfahrens aufgetragen werden. Im übrigen gleicht der Überzug 4 die »Unebenheiten« durch die konischen Übergangsbereiche 2 aus und bildet eine zylindrische Mantelfläche.

## Patentansprüche

1. Verfahren zum Herstellen von Walzen zum Transportieren und/oder Pressen von blatt- oder bandförmigem, fotografischem Material, welche eine im Verhältnis zum Durchmesser große Länge, ein zylindrisches Metallrohr als Grundkörper, zum Walzenmantel konzentrische Lagerzapfen und einen gegen aggressive Flüssigkeiten widerstandsfähigen Überzug aufweisen, dadurch gekennzeichnet, daß das Metallrohr mit einer Länge geringfügig kleiner als die Länge des fertiggestellten Produktes an den beiden Enden rundgehämmert wird, derart, daß jeweils ein zylindrisches Außenstück und ein zwischen Außenstück und dem unverformten Metallrohr verlaufender konischer Übergangsbereich gebildet wird, und daß der Überzug auf das unverformte Metallrohr und auf die im wesentlichen ganze Länge der beiden Übergangsbereiche aufgetragen wird.

2. Verfahren nach Anspruch 1, dadurch gekennzeichnet, daß als Überzug Gummi aufvulkanisiert wird.

3. Verfahren nach Anspruch 1, dadurch gekennzeichnet, daß als Überzug Kunststoff, vorzugsweise thermoplastischer Kunststoff aufgespritzt oder aufextrudiert wird.

4. Walze zum Transportieren und/oder Pressen von blatt- oder bandförmigem, fotografischem Material, mit einer im Verhältnis zum Durchmesser großen Länge, einem zylindrischen Metallrohr als Grundkörper, mit zum Walzenmantel konzentrischen Lagerzapfen und mit einem gegen aggressive Flüssigkeiten widerstandsfähigen Überzug, dadurch gekennzeichnet, daß die Lagerzapfen (3) einstückig an dem Metallrohr (1) ausgeformt sind, wobei zwischen den Lagerzapfen (3) und dem zylindrischen Mittelbereich des Metallrohres (1) ein rohrförmiger, konischer Übergangsbereich (2) verläuft, und daß der Überzug (4) über der im wesentlichen gesamten Länge jedes konischen Übergangsbereiches (2) und dem unverformten Metallrohr (1) aufgetragen ist und einen zylindrischen Außenmantel aufweist.

5. Walze nach Anspruch 4, dadurch gekennzeichnet, daß der Überzug aus Kunststoff oder Gummi ist.

6. Walze nach Anspruch 5, dadurch gekennzeichnet, daß ein thermoplastischer Kunststoff, wie Hartpolyvenylchlorid, feinkristallines Polyamid, Polypropylen, Polyäthylen oder eine Mischung dieser Werkstoffe verwendet ist.

7. Walze nach einem der Ansprüche 4 bis 6, dadurch gekennzeichnet, daß der aus zylindrischem Metallrohr (1), konischem Übergangsbereich (2) und Lagerzapfen (3) mit gegenüber dem Metallrohr (1) geringeren Durchmesser bestehende Walzenkern durch Rundhämmern hergestellt ist.

**Claims**

1. A method of producing rollers for transporting and/or pressing photographic material in the form of sheets or strips, which have a length which is great in relation to the diameter, a cylindrical metal tube as a base body, journals concentric to the roller casing and a coating which is resistant to corrosive fluids, characterized in that the metal tube, which has a length slightly shorter than the length of the finished product, is swaged at both ends in such a way that a cylindrical outer part and a conical transition region extending between the outer part and the unworked metal tube are formed in each case, and in that the coating is applied onto the unworked metal tube and onto essentially the entire length of the two transition regions.

2. A method as claimed in claim 1, characterized in that rubber is vulcanised on as the coating.

3. A method as claimed in claim 1, characterized in that plastics material, preferably thermoplastic plastics material, is sprayed on or extruded on as the coating.

4. A roller for transporting and/or pressing photographic material in the form of sheets or strips, having a length which is great in relation to the diameter, a cylindrical metal tube as a base body, with journals concentric to the roller casing and with a coating which is resistant to corrosive fluids, characterized in that the journals (3) are formed in one piece on the metal tube (1), in that a tubular, conical transition region (2) extends between the journals (3) and the cylindrical central region of the metal tube (1), and in that the coating (4) is applied essentially over the entire length of each conical transition region (2) and the unworked metal tube (1) and comprises a cylindrical outer casing.

5. A roller as claimed in claim 4, characterized in that the coating is made of plastics material or rubber.

6. A roller as claimed in claim 5, characterized in that a thermoplastic plastics material, such as rigid polyvinylchloride, finely crystalline polyamide, polypropylene, polyethylene or a mixture of these materials is used.

7. A roller as claimed in one of claims 4 to 6, characterized in that the roller core consisting of the cylindrical metal tube (1), conical transition region (2) and journals (3) and having a smaller diameter than the metal tube (1) is produced by swaging.

**Revendications**

1. Procédé de fabrication de rouleaux destinés à transporter et/ou à presser un matériau photographique en forme de feuille ou de bande, qui présentent, comme corps de base, un tube cylindrique métallique, de grande longueur par rapport au diamètre, des tourillons concentriques à la surface latérale du rouleau et un revêtement résistant aux liquides agressifs, caractérisé en ce que le tube métallique ayant une longueur légèrement plus petite que la longueur du produit fini est soumis à un matriçage circulaire aux deux extrémités de manière à former respectivement une partie extérieure cylindrique et une région conique de transition s'étendant entre la partie extérieure et la partie du tube métallique qui n'est pas déformée, et en ce que le revêtement est appliqué sur la partie du tube métallique qui n'est pas déformée et sensiblement sur toute la longueur des deux régions de transition.

2. Procédé suivant la revendication 1, caractérisé en ce qu'il consiste à déposer du caoutchouc par vulcanisation, comme revêtement.

3. Procédé suivant la revendication 1, caractérisé en ce qu'il consiste à déposer par projection ou par extrusion de la matière plastique, de préférence de la matière plastique thermoplastique, comme revêtement.

4. Rouleau destiné à transporter et/ou à presser un matériau photographique en forme de feuille ou de bande, comprenant comme corps de base, un tube métallique cylindrique de grande longueur par rapport au diamètre, des tourillons concentriques à la surface latérale du rouleau, et un revêtement résistant aux liquides agressifs, caractérisé en ce que les tourillons (3) sont formés d'une pièce avec le tube métallique (1), une région conique de transition (2), de forme tubulaire, s'étendant entre les tourillons (3) et la partie centrale cylindrique du tube métallique (1), et en ce que le revêtement (4) est déposé sur sensiblement toute la longueur de chaque région conique de transition (2) et sur la partie non déformée du tube métallique (1), et présente une face latérale extérieure cylindrique.

5. Rouleau suivant la revendication 4, caractérisé en ce que le revêtement est en matière plastique ou en caoutchouc.

6. Rouleau suivant la revendication 5, caractérisé en ce qu'une matière thermoplastique comme du poly(chlorure de vinyle) dur, du polyamide finement cristallisé, du polypropylène, du polyéthylène ou un mélange de ces matériaux est utilisée.

7. Rouleau suivant l'une des revendications 4 à 6, caractérisé en ce que le coeur du rouleau, constitué du tube métallique cylindrique (1), de la région conique de transition (2) et des tourillons (3) de diamètre plus petit que celui du tube métallique (1), est fabriqué par matriçage circulaire.